# EUROPÄISCHE PATENTANMELDUNG

(11) **EP 3 653 460 A1**
(43) Veröffentlichungstag der Anmeldung: **20.05.2020**
(21) Anmeldenummer: 19208493.7
(22) Anmeldetag: 12.11.2019
(51) Int. Cl.: B60W 30/165, B60W 30/18, G05D 1/02, B60W 50/00

(54) **VERFAHREN UND STEUEREINHEIT ZUM BETREIBEN EINES AUTONOMEN FAHRZEUGS**

(30) Priorität: 16.11.2018 DE 102018219665
(71) Anmelder: ZF Friedrichshafen AG, 88046 Friedrichshafen (DE)
(72) Erfinder: Stephan, Tobias, 88142 Wasserburg (DE)
(74) Vertreter: ZF Friedrichshafen AG

(57) **Zusammenfassung**

Steuereinheit für autonomes Fahren (18) für ein Fahrzeug (1), die einen Prozessor umfasst, der dazu ausgelegt ist, in Abhängigkeit von einem geplanten Fahrmanöver eine korrigierte Fahrposition zu ermitteln, durch welche ein Erfassungsbereich (8) von Umfeldsensoren (20) des Fahrzeugs (1) bezüglich dem geplanten Fahrmanöver verbessert wird.

## Beschreibung

### TECHNISCHES GEBIET

Die vorliegende Offenbarung betrifft ein Verfahren und eine Steuereinheit zum Betreiben eines autonomen Fahrzeugs.

### TECHNISCHER HINTERGRUND

Als autonomes Fahrzeug bezeichnet man ein Fahrzeug, das ohne Einfluss eines menschlichen Fahrers im Straßenverkehr agieren kann. Beim autonomen Fahren übernimmt das Steuerungssystem des Fahrzeugs vollständig oder weitestgehend die Rolle des Fahrers. Autonome Fahrzeuge können mit Hilfe verschiedener Sensoren ihre Umgebung wahrnehmen, aus den gewonnenen Informationen ihre Position und die anderer Verkehrsteilnehmer bestimmen und mithilfe des Steuerungssystems und der Navigationssoftware des Fahrzeugs das Fahrziel ansteuern und im Straßenverkehr entsprechend agieren.

Wie aus der Schrift DE 10 2014 212 746 A1 hervorgeht, hat die Verwendung von Automation beim Fahren von Straßenfahrzeugen, wie Autos und Lastwagen, durch die Fortschritte in Sensortechnologien (z.B. Objektnachweis und Standortverfolgung), Kontrollalgorithmen und Dateninfrastrukturen zugenommen.

Neben dem Gewinn an Mobilität, vor allem für Menschen mit Behinderung und ältere Menschen, reduziert automatisiertes Fahren die Gefahr von Unfällen durch zu lange Reaktionszeiten, Müdigkeit, Ablenkung und andere menschliche Faktoren.

Andererseits können autonome (selbstfahrende) Fahrzeuge ein Fahrverhalten aufweisen, das sich vom Fahrverhalten von Personen-gesteuerten Fahrzeugen deutlich unterscheidet, zum Beispiel was das Bremsverhalten und das Manövrieren im Straßenverkehr betrifft.

Bei geregelter Folgefahrt, beispielsweise beim Fahren mit Adaptiver Geschwindigkeitsregelung (engl. ACC = Adaptive Cruise Control) oder im stop-and-go-Betrieb hinter einem großen, ausgedehnten Objekt (z.B. LKW mit hohem Anhänger/Auflieger etc.) ist der Erfassungsbereich eingeschränkt. Ein manueller Fahrer würde nun je nach geplanter Aktion beginnen, versetzt zu fahren oder sich weiter zurückfallen zu lassen.
Derzeitige teilautomatisierte Systeme folgen dem vorausfahrenden Fahrzeug mittig im eingestellten Abstand. Zukünftige Systeme müssten für eine intelligente Funktionsweise ähnliche Methoden wie der manuelle Fahrer anwenden, um unter dem gegebenen Erfassungsbereich und den situativen Einschränkungen eine maximale Vorausschau zu erhalten.

Vor diesem Hintergrund offenbart die deutsche Patentanmeldung DE 10 2006 001649 A1 ein Fahrregelungssystem bei dem sich vor dem Fahrzeug befindliche Hindernisse wie etwa ein Vorausfahrzeug von einer Kamera erfasst werden, und ein Gesichtsfeldverhältnis von einem durch das Hindernis eingeschränkten Gesichtsfeld zu einem Gesamtgesichtsfeld durch ein Bildverarbeitungssystem berechnet wird. Eine elektronische Steuereinheit erzeugt Soll-Stellwerte auf der Grundlage des Gesichtsfeldverhältnisses zur Regelung einer Geschwindigkeit und/oder einer seitlichen Position des Fahrzeugs in einer Fahrspur durch Aktuatoren. Das Fahrzeug wird auf der Grundlage von Informationen, die verschiedene sich vor dem Fahrzeug befindliche Hindernisse enthalten, geregelt, um so eine verbesserte Sicherheit eines Fahrers zu gewährleisten. Das in der DE 10 2006 001649 A1 offenbarte Fahrregelungssystem beruht ausschließlich auf erfassten Bilddaten.

Hiervon ausgehend liegt der Erfindung die Aufgabe zu Grunde, ein Verfahren und eine Steuerungseinheit zum Betreiben eines autonomen Fahrzeugs bereitzustellen, die das Fahrverhalten des Fahrzeugs optimiert.

Diese Aufgabe wird durch die Steuereinheit für autonomes Fahren nach Anspruch 1 und das Verfahren nach Anspruch 10 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Gemäß den unten beschriebenen Ausführungsbeispielen wird eine Steuereinheit für autonomes Fahren bereitgestellt, die einen Prozessor umfasst, der dazu ausgelegt ist, in Abhängigkeit von einem geplanten Fahrmanöver eine korrigierte Fahrposition zu ermitteln, durch welche ein Erfassungsbereich von Umfeldsensoren des Fahrzeugs bezüglich dem geplanten Fahrmanöver verbessert wird.

Insbesondere ist der Prozessor dazu ausgelegt, in Abhängigkeit von einem geplanten Fahrmanöver eine korrigierte Fahrposition zu ermitteln, in welcher der Erfassungsbereich der Umfeldsensoren einen für das geplante Fahrmanöver relevanten Umfeldbereich besser abdeckt.

Bei dem geplanten Fahrmanöver kann es sich beispielsweise um eine bestimmte Fahrsituation handeln, die eine objektiv gegebene räumliche und zeitliche Konstellation der verkehrsbezogenen Einflussgrößen der Funktionsumgebung eines Fahrzeugs darstellt. Fahrmanöver können in der Steuereinheit vordefiniert sein und beispielsweise durch Kontextinformationen (z.B. Position des Fahrzeugs, Navigationskontext oder dergleichen) und Fahrzeugbetriebsparameter (Geschwindigkeit, Querbeschleunigung, Drehmoment) festgelegt sein. Ein geplantes Fahrmanöver kann beispielsweise - wie es dem Fachmann bekannt ist - durch Kontextinformationen (Position des Fahrzeugs, Navigationskontext) und Fahrzeugbetriebsparameter (Geschwindigkeit, Querbeschleunigung, Drehmoment) festgelegt sein. Beispiele für Fahrmanöver sind "bevorstehendes Linksabbiegen, "Überholen bei nächster Gelegenheit", "Abfahren von einer Autobahn", "Umfahren eines stehenden Fahrzeugs", "bevorstehendes Rechtsabbiegen", "Anhalten an einer Haltebucht" und dergleichen.

Bei der Steuereinheit für autonomes Fahren kann es sich beispielsweise um ein Steuergerät (engl. ECU = electronic control unit oder ECM = electronic control module) handeln. Die Steuereinheit für autonomes Fahren (z.B. ein "Autopilot") kann beispielsweise in einem autonomen Fahrzeug eingesetzt werden, so dass dieses ganz oder teilweise ohne Einfluss eines menschlichen Fahrers im Straßenverkehr agieren kann. Die Steuereinheit kann sich im Fahrzeug befinden, oder auch außerhalb oder teilweise außerhalb des Fahrzeugs. Es können auch Bilddaten in einem Fahrzeug ermittelt werden und von dort zu einem Server oder in ein Cloud-System übertragen werden, wo auf Grundlage der übermittelten Bilddaten und eines geplanten Fahrmanövers eine optimale Fahrposition des Fahrzeugs ermittelt wird und das Ergebnis wieder an das Fahrzeug rückübermittelt wird. Demgemäß ist vorgesehen, dass die Steuereinheit bzw. Steuerlogik ganz oder teilweise auch außerhalb des Fahrzeugs liegen kann. So kann es sich bei der Steuerlogik beispielsweise um einen Algorithmus handeln, der auf einem Server oder einem Cloud-System abläuft.

Bei dem Prozessor kann es sich beispielsweise um eine Recheneinheit wie eine zentrale Verarbeitungseinheit (CPU = central processing unit) handeln, die Programminstruktionen ausführt.

Bei den Umfeldsensoren kann es sich beispielsweise um Umfeldsensoren handeln, die am Fahrzeug montiert sind und autark, d. h. ohne Informationssignale von außen, Objekte oder Zustände im Umfeld des Fahrzeugs erfassen. Hierzu zählen insbesondere Kameras, Radar-Sensoren, Lidar-Sensoren, Ultraschall-Sensoren oder dergleichen.

Der Prozessor kann ferner dazu ausgelegt sein, die korrigierte Fahrposition bei geregelter Folgefahrt des Fahrzeugs hinter einem Vorausfahrzeug, welches den Erfassungsbereich der Umfeldsensoren des Fahrzeugs einschränkt, zu ermitteln.

Bei dem Vorausfahrzeug kann es sich beispielsweise um einen LKW mit hohem Anhänger/Auflieger etc. handeln.

Bei der geregelten Folgefahrt kann es sich um eine Fahrt mit Adaptiver Geschwindigkeitsregelung oder um eine Fahrt im stop-and-go-Betrieb hinter einem Vorausfahrzeug handeln.

Beispielsweise kann die geregelte Folgefahrt mittels einer Abstandsregeltempomat-Funktionalität realisiert werden, die bei der Regelung den Abstand zu einem vorausfahrenden Fahrzeug als zusätzliche Rückführ- und Stellgröße einbezieht.

Der Prozessor kann ferner dazu ausgelegt sein, die korrigierte Fahrposition basierend auf Informationen eines sensorbasierten Umfeldmodels zu ermitteln. Zur Bestimmung der korrigierten Fahrposition können beispielsweise Informationen wie etwa die mittels Umfeldsensoren erkannte exakte Position des vorausfahrenden Fahrzeugs oder der sichtbare Fahrspurverlauf herangezogen werden. Ferner kann zur Ermittlung der korrigierten Fahrposition die mittels Positionierungssystemen (z.B. GPS) bekannte eigene Position des Fahrzeugs herangezogen werden.

Ferner können zur Ermittlung der korrigierten Fahrposition Streckeninformationen über ein Navigationssystem herangezogen werden. Gemäß einem Ausführungsbeispiel der Erfindung ist der Steuereinheit für autonomes Fahren über das Navigationssystem der zukünftige Streckenverlauf bekannt und die Steuereinheit für autonomes Fahren optimiert die Fahrposition auf Grundlage dieser Informationen im Hinblick auf ein anstehendes Fahrmanöver, beispielsweise eine vorausliegende Linkskurve, ein geplantes Abbiegen an einer Abzweigung, oder dergleichen.

Ferner können Informationen aus sogenannten hochauflösenden (engl. "high definition" = HD) Karten herangezogen werden. Hochauflösende Karten bieten ein hochgenaues und realistisches 3D-Modell des Straßennetzes. Durch den permanenten Abgleich der in Echtzeit erfassten Daten seiner Sensoren mit den hinterlegten Straßen- und Umgebungsdaten der HD-Karten kann das autonome Fahrzeug seine Position hochpräzise und unabhängig von Navigationssignalen bestimmen, über Unfallgefahren, Staus oder ähnliche verkehrsrelevante Dinge informiert werden und die Position von eventuellen stationären Hindernissen ermitteln. Auf Grundlage derartiger Daten kann das Fahrzeug ferner Manöver planen und durchführen.
Der Prozessor kann ferner dazu ausgelegt sein, die korrigierte Fahrposition unter Berücksichtigung des zulässigen Fahrspurbereichs zu ermitteln. Insbesondere kann zur Bestimmung der korrigierten Fahrposition der sichtbare Fahrspurverlauf herangezogen werden. Beispielsweise kann der Prozessor bei der Ermittlung der korrigierten Fahrposition den Verlauf der Fahrbahnmittelspur oder der Fahrbahnrandmarkierungen berücksichtigen. Befindet sich beispielsweise eine ermittelte Zielposition innerhalb des zulässigen Fahrspurbereichs, so wird die neue Position eingestellt.

Der Prozessor kann ferner dazu ausgelegt sein, die korrigierte Fahrposition auf Basis eines geometrischen Models zu ermitteln. Beispielsweise kann auf Basis von Daten der Umfeldsensoren eine relative Position und eine Ausdehnung eines Vorausfahrzeugs ermittelt werden und mittels eines geometrischen Modells kann dann die relative Position des Vorausfahrzeugs bezüglich einer potentiellen korrigierten Fahrposition ermittelt werden, sowie ein durch das Vorausfahrzeug bewirkter Verdeckungsbereich der Umfeldsensoren bezüglich der potentiellen korrigierten Fahrposition. Auf diese Weise kann vorausberechnet werden, welche Fahrposition einen optimalen oder verbesserten Erfassungsbereich der Umfeldsensoren ermöglicht und die Steuereinheit für autonomes Fahren kann auf Grundlage dieser Vorausberechnung eine verbesserte oder optimierte Fahrposition auswählen und diese einregeln. So kann der Erfassungsbereich der Umfeldsensoren den für das geplante Fahrmanöver relevanten Umfeldbereich optimal oder besser abdecken.

Der Prozessor kann ferner dazu ausgelegt sein, zur Ermittlung der korrigierten Fahrposition die Position des vorausfahrenden Fahrzeugs heranzuziehen. Beispielsweise kann der Prozessor die korrigierte Fahrposition durch einen Folgeabstand des Fahrzeugs vom Vorausfahrzeug und/oder durch einen Lateralversatz bezüglich des Vorausfahrzeugs definieren.

Der Prozessor kann ferner dazu ausgelegt sein, die ermittelte korrigierte Fahrposition einzuregeln. Beispielsweise kann der Prozessor die korrigierte Fahrposition durch Ansteuerung von Aktuatoren von Fahrzeugsubsystemen auf Grundlage von Informationen von Umfeldsensoren oder dergleichen einregeln. Bei den Aktuatoren kann es sich beispielsweise um Lenk-, Brems- und/oder Antriebsaktuatoren handeln. Die Steuereinheit für autonomes Fahren kann eine Steuereinheit für ein Lenksystem, eine Steuereinheit für ein Bremssystem und/oder eine Steuereinheit für einen Antriebstrang so ansteuern, dass bestimmte Fahrmanöver ausgeführt werden.

Die Erfindung betrifft auch ein Fahrzeug mit einer erfindungsgemäßen Steuereinheit für autonomes Fahren. Bei dem Fahrzeug kann es sich beispielsweise um ein Kraftfahrzeug wie einen PKW, einen LKW oder dergleichen handeln.

Die Erfindung betrifft auch ein Verfahren für autonomes Fahren, bei dem in Abhängigkeit von einem geplanten Fahrmanöver eine korrigierte Fahrposition ermittelt wird, durch welche der Erfassungsbereich der Umfeldsensoren bezüglich dem geplanten Fahrmanöver verbessert wird. Bei dem Verfahren kann es sich um ein computer-implementiertes Verfahren handeln.

Ausführungsformen werden nun beispielhaft und unter Bezugnahme auf die beigefügten Zeichnungen beschrieben, in denen:
FIG. 1 ein Blockdiagramm zeigt, das schematisch die Konfiguration eines autonomen Fahrzeugs gemäß einem Ausführungsbeispiel der vorliegenden Erfindung darstellt,
FIG. 2 ein Blockdiagramm ist, das eine beispielhafte Konfiguration einer Steuereinheit für autonomes Fahren zeigt,
FIG. 3 eine typische Fahrsituation eines autonom fahrenden Fahrzeugs zeigt,
FIG. 4 eine Tabelle darstellt, die zeigt, wie gemäß einem Ausführungsbeispiel der Erfindung verschiedenen geplanten Fahrmanövern bestimmte Veränderungen der Fahrzeugposition innerhalb der Fahrspur zugeordnet werden,
FIG. 5 ein Flussdiagramm zeigt, welches ein Ausführungsbeispiel des Verfahrens gemäß der vorliegenden Erfindung veranschaulicht, bei dem die Steuereinheit für autonomes Fahren die seitliche Position des Fahrzeugs innerhalb der Fahrspur auf Grundlage des geplanten Fahrmanövers einstellt,
FIG. 6a ein Fahrzeug in einer Position innerhalb der Fahrspur zeigt, wenn es auf ein Vorausfahrzeug trifft und das geplante Fahrmanöver ein Fahren einer Linkskurve ist,
FIG. 6b das Fahrzeug aus Fig. 6a in einer gemäß der vorliegenden Erfindung korrigierten seitlichen Position innerhalb der Fahrspur zeigt, wenn das Fahrzeug dem Vorausfahrzeug folgt und das geplante Fahrmanöver eine Linkskurve ist,
FIG. 6c ein Fahrzeug in einer Position innerhalb der Fahrspur zeigt, wenn es auf ein Vorausfahrzeug trifft und das geplante Fahrmanöver ein Rechtsabbiegen ist,
FIG. 6d das Fahrzeug aus 6c in einer gemäß der vorliegenden Erfindung korrigierten seitlichen Position innerhalb der Fahrspur zeigt, wenn das Fahrzeug dem Vorausfahrzeug folgt und das geplante Fahrmanöver ein Rechtsabbiegen ist,
FIG. 7a ein Fahrzeug in einer Position innerhalb der Fahrspur zeigt, wenn es auf ein stationäres Sichthindernis trifft und das geplante Fahrmanöver ein Fahren einer Linkskurve ist,
FIG. 7b das Fahrzeug aus Fig. 7a in einer gemäß der vorliegenden Erfindung korrigierten seitlichen Position innerhalb der Fahrspur zeigt,
FIG. 8 eine Tabelle darstellt, die zeigt, wie gemäß einem alternativen Ausführungsbeispiel der Erfindung verschiedenen geplanten Fahrmanövern bestimmte Veränderungen des Folgeabstandes des Fahrzeugs zu dem Vorausfahrzeug zugeordnet werden,
FIG. 9 ein Flussdiagramm zeigt, welches ein alternatives Ausführungsbeispiel des Verfahrens gemäß der vorliegenden Erfindung veranschaulicht, bei dem die Steuereinheit für autonomes Fahren den Folgeabstandes des Fahrzeugs zu dem Vorausfahrzeug auf Grundlage des geplanten Fahrmanövers einstellt,
FIG. 10a ein Fahrzeug in einem Abstand d zu einem Vorausfahrzeug zeigt, wobei das geplante Fahrmanöver ein Fahren einer Linkskurve ist,
FIG. 10b das Fahrzeug aus Fig. 10a in einem gemäß dem alternativen Ausführungsbeispiel des Verfahrens der vorliegenden Erfindung korrigierten Abstand zum Vorausfahrzeug zeigt,
FIG. 11 eine Tabelle darstellt, die zeigt, wie gemäß einem weiteren alternativen Ausführungsbeispiel der Erfindung verschiedenen geplanten Fahrmanövern sowohl Veränderungen des Lateralversatzes des Fahrzeugs innerhalb der Fahrspur als auch des Folgeabstandes des Fahrzeugs zu dem Vorausfahrzeug zugeordnet werden,
FIG. 12a ein Fahrzeug zeigt, wenn es ein Vorausfahrzeug in einem Abstand d vordem Fahrzeug erfasst und das geplante Fahrmanöver ein Überholmanöver bei nächster Gelegenheit ist,
FIG. 12b das Fahrzeug aus Fig. 12a in einer gemäß dem weiteren alternativen Ausführungsbeispiel des Verfahrens der vorliegenden Erfindung korrigierten Position bezüglich des Vorausfahrzeugs und der Fahrspur zeigt, und
FIG. 13 eine Darstellung zeigt, welche die Berechnung einer korrigierten Fahrzeugposition auf Basis von geometrischen Modellen veranschaulicht.

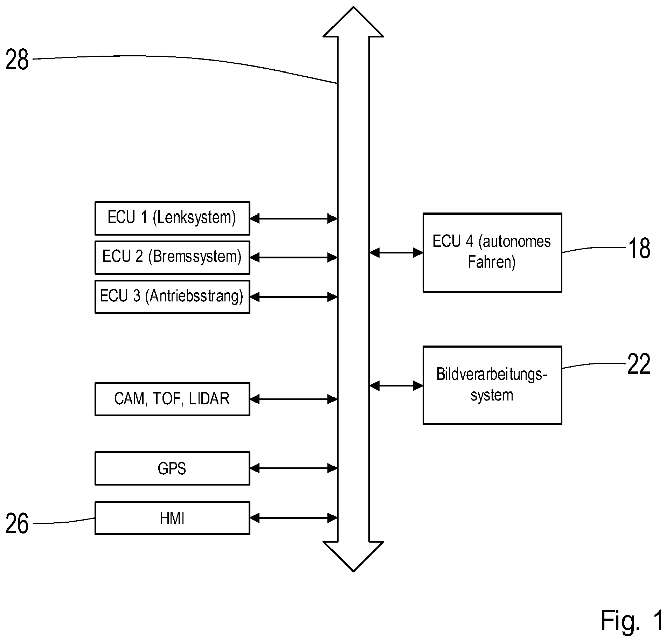

FIG. 1 zeigt ein Blockdiagramm, das schematisch die Konfiguration eines Fahrzeugs 1 mit einer Steuereinheit für autonomes Fahren gemäß einem Ausführungsbeispiel der vorliegenden Erfindung darstellt. Das autonome Fahrzeug 1 umfasst mehrere elektronische Komponenten, welche via ein Fahrzeugkommunikationsnetzwerk 28 miteinander verbunden sind. Das Fahrzeugkommunikationsnetzwerk 28 kann beispielsweise ein im Fahrzeug eingebautes standardgemäßes Fahrzeugkommunikationsnetzwerk wie etwa ein CAN-Bus (controller area network), ein LIN-Bus (local interconnect network), ein LAN-Bus (local area network), ein MOST-Bus und/oder ein FlexRay-Bus (registered trademark) oder dergleichen sein.

In dem in FIG. 1 dargestellten Beispiel umfasst das autonome Fahrzeug 1 eine Steuereinheit 12 (ECU 1). Diese Steuereinheit 12 steuert ein Lenksystem. Das Lenksystem bezieht sich dabei auf die Komponenten, die eine Richtungssteuerung des Fahrzeugs ermöglichen.

Das autonome Fahrzeug 1 umfasst ferner eine Steuereinheit 14 (ECU 2), die ein Bremssystem steuert. Das Bremssystem bezieht sich dabei auf die Komponenten, die ein Bremsen des Fahrzeugs ermöglichen.

Das autonome Fahrzeug 1 umfasst ferner eine Steuereinheit 16 (ECU 3), die einen Antriebsstrang steuert. Der Antriebsstrang bezieht sich dabei auf die Antriebskomponenten des Fahrzeugs. Der Antriebsstrang kann einen Motor, ein Getriebe, eine Antriebs-/Propellerwelle, ein Differential und einen Achsantrieb umfassen.

Das autonome Fahrzeug 1 umfasst ferner eine Steuereinheit für autonomes Fahren 18 (ECU 4). Die Steuereinheit für autonomes Fahren 18 ist dazu ausgelegt, das autonome Fahrzeug 1 so zu steuern, dass dieses ganz oder teilweise ohne Einfluss eines menschlichen Fahrers im Straßenverkehr agieren kann.

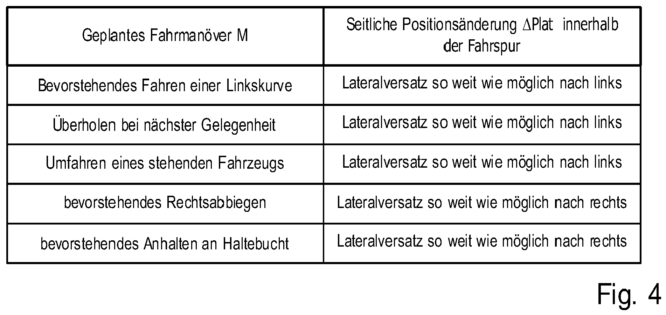

Die Steuereinheit für autonomes Fahren 18, die in Fig. 4 und der zugehörigen Beschreibung näher beschrieben ist, steuert ein oder mehrere Fahrzeugsubsysteme während das Fahrzeug im autonomen Modus betrieben wird, nämlich das Bremssystem 14, das Lenksystem 12 und das Antriebssystem 14. Hierfür kann die Steuereinheit für autonomes Fahren 18 beispielsweise über das Fahrzeugkommunikationsnetzwerk 28 mit den entsprechenden Steuereinheiten 12, 14 und 16 kommunizieren. Die Steuereinheiten 12, 14 und 16 können ferner von den oben genannten Fahrzeugsubsystemen Fahrzeugbetriebsparameter empfangen, die diese mittels einem oder mehreren Fahrzeugsensoren erfassen. Fahrzeugsensoren sind vorzugsweise solche Sensoren, die einen Zustand des Fahrzeugs oder einen Zustand von Fahrzeugteilen erfassen, insbesondere deren Bewegungszustand. Die Sensoren können einen Fahrzeuggeschwindigkeitssensor, einen Gierraten-Sensor, einen Beschleunigungssensor, einen Lenkradwinkelsensor, einen Fahrzeuglastsensor, Temperatursensoren, Drucksensoren und dergleichen umfassen. Beispielsweise können auch Sensoren entlang der Bremsleitung angeordnet sein, um Signale auszugeben, die den Bremsflüssigkeitsdruck an verschiedenen Stellen entlang der hydraulischen Bremsleitung anzeigen. Andere Sensoren in der Nähe des Rades können vorgesehen sein, welche die Radgeschwindigkeit und den Bremsdruck erfassen, der am Rad aufgebracht wird.

Die Fahrzeugsensorik des autonomen Fahrzeugs 1 umfasst ferner eine Satellitennavigationseinheit 24 (GPS-Einheit). Es sei darauf hingewiesen, dass im Kontext der vorliegenden Erfindung GPS stellvertretend für sämtliche Globale Navigationssatellitensysteme (GNSS) steht, wie z.B. GPS, A-GPS, Galileo, GLONASS (Russland), Compass (China), IRNSS (Indien) und dergleichen.

Wenn steuerungsseitig oder fahrerseitig ein Betriebszustand für das autonome Fahren aktiviert ist, bestimmt die Steuereinheit für autonomes Fahren 18, auf Grundlage von zur Verfügung stehenden Daten über eine vorgegebene Fahrtstrecke, von Umweltsensoren aufgenommenen Umgebungsdaten, sowie von mittels den Fahrzeugsensoren erfassten Fahrzeugbetriebsparametern, die der Steuereinheit 18 von den Steuereinheiten 12, 14 und 16 zugeleitet werden, Parameter für den autonomen Betrieb des Fahrzeugs (beispielsweise Soll-Geschwindigkeit, Soll-Moment, Abstand zum Vorausfahrzeug, Abstand zum Fahrbahnrand, Lenkvorgang und dergleichen).

Das autonome Fahrzeug 1 umfasst ferner einen oder mehrere Umfeldsensoren 20, die dazu ausgelegt sind, das Umfeld des Fahrzeugs 1 zu erfassen, wobei die Umfeldsensoren 20 am Fahrzeug 1 montiert sind und autark, d. h. ohne Informationssignale von außen, Objekte oder Zustände im Umfeld des Fahrzeugs erfassen. Hierzu zählen insbesondere Kameras, Radar-Sensoren, Lidar-Sensoren, Ultraschall-Sensoren oder dergleichen. Die Umfeldsensoren 20 können innerhalb des Fahrzeugs oder außerhalb des Fahrzeugs (z. B. an der Außenseite des Fahrzeugs) angeordnet sein. Beispielsweise kann eine Kamera in einem vorderen Bereich des Fahrzeugs 1 zur Aufnahme von Bildern eines vor dem Fahrzeug befindlichen Bereichs eingebaut sein.

Die Steuereinheit für autonomes Fahren 18 kann für die Adaptive Geschwindigkeitsregelung (ACC) über die Umfeldsensoren 20 die Position und die Geschwindigkeit des vorausfahrenden Fahrzeugs messen und die Geschwindigkeit des Fahrzeugs sowie den Abstand zu dem Vorausfahrzeug via Antriebs- und Bremseingriff entsprechend anpassen.

Das autonome Fahrzeug 1 kann ferner ein Bildverarbeitungssystem 22 zur Verarbeitung von Bilddaten, beispielsweise von Bilddaten eines von einer Kamera in Fahrtrichtung aufgenommenen Bildes des Bereichs vor dem eigenen Fahrzeug, umfassen. Hindernisse wie etwa ein Vorausfahrzeug (2 in FIG. 1), das sich im vorderen Blickfeld eines Fahrzeugs befindet, werden von der Kamera erfasst und die Bilddaten an das Bildverarbeitungssystem übertragen. Das Bildverarbeitungssystem verarbeitet die von der Kamera erhaltenen Bilddaten, um Informationen über die vor dem Fahrzeug befindlichen Hindernisse, wie etwa ein Vorausfahrzeug, und das eigene Fahrzeug in einer Fahrspur zu erzeugen und bereitzustellen. Beispielsweise kann das Bildverarbeitungssystem aus der Form und Position der Fahrbahnmarkierungen eine Form und Breite der Fahrspur und eine seitliche Position des Fahrzeugs 1 innerhalb der Fahrspur ableiten. Diese Informationen werden an die Steuereinheit für autonomes Fahren 18 übertragen und können in die Bestimmung der Fahrzeugbetriebsparameter mit einfließen.

Das autonome Fahrzeug 1 umfasst ferner eine Benutzerschnittstelle 26 (HMI = Human-Machine-Interface), die einem Fahrzeuginsassen ermöglicht, mit einem oder mehreren Fahrzeugsystemen in Interaktion zu stehen. Diese Benutzerschnittstelle 26 kann eine elektronische Anzeige (beispielsweise eine GUI = graphical user interface) zum Ausgeben einer Graphik, von Symbolen und/oder Inhalt in Textform, und eine Eingabeschnittstelle zum Empfangen einer Eingabe (beispielsweise manuelle Eingabe, Spracheingabe und Eingabe durch Gesten, Kopf- oder Augenbewegungen) umfassen. Die Eingabeschnittstelle kann beispielsweise Tastaturen, Schalter, berührungsempfindliche Bildschirme (Touchscreen), Eye-Tracker und dergleichen umfassen.

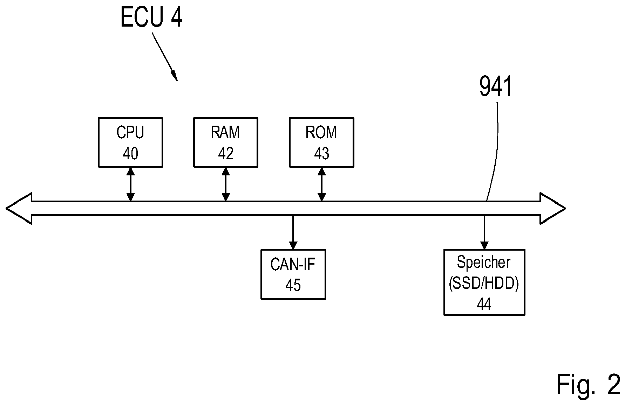

FIG. 2 zeigt ein Blockdiagramm, das eine beispielhafte Konfiguration einer Steuereinheit für autonomes Fahren 18 (ECU 4) darstellt. Bei der Steuereinheit für autonomes Fahren 18 kann es sich beispielsweise um ein Steuergerät (electronic control unit ECU oder electronic control module ECM) handeln. Die Steuereinheit für autonomes Fahren 18 (ECU 4) umfasst einen Prozessor 40. Bei dem Prozessor 40 kann es sich beispielsweise um eine Recheneinheit wie eine zentrale Verarbeitungseinheit (CPU = central processing unit) handeln, die Programminstruktionen ausführt.

Der Prozessor der Steuereinheit für autonomes Fahren 18 ist dazu ausgelegt, in Abhängigkeit von einem geplanten Fahrmanöver, basierend auf den Informationen des sensorbasierten Umfeldmodells, eine optimale Fahrposition (Folgeabstand, Lateralversatz) unter Berücksichtigung des zulässigen Fahrspurbereichs zu berechnen. Die errechnete optimale Fahrposition wird zur Steuerung von Aktuatoren der Fahrzeugsubsysteme 12, 14 und 16, beispielsweise von Brems-, Antriebs- und/oder Lenkaktuatoren, verwendet.

Die Steuereinheit für autonomes Fahren 18 umfasst ferner einen Speicher und eine Eingabe/ Ausgabe-Schnittstelle. Der Speicher kann aus einem oder mehreren nichtflüchtigen computerlesbaren Medien bestehen und umfasst mindestens einen Programmspeicherbereich und einen Datenspeicherbereich. Der Programmspeicherbereich und der Datenspeicherbereich können Kombinationen von verschiedenen Arten von Speicher umfassen, beispielsweise von einem Nur-Lese-Speicher 43 (ROM = Read-only memory) und einem Direktzugriffsspeicher 42 (RAM = Random Access Memory) (z. B. dynamischer RAM ("DRAM"), synchron DRAM ("SDRAM") usw.). Ferner kann die Steuereinheit für autonomes Fahren 18 ein externes Speicherlaufwerk 44, wie beispielsweise ein externes Festplattenlaufwerk (hard disk drive: HDD), ein Flashspeicher-Laufwerk oder ein nicht flüchtiges Festkörperlaufwerk (solid state drive: SSD) umfassen.

Die Steuereinheit für autonomes Fahren 18 umfasst ferner eine Kommunikationsschnittstelle 45, über welche die Steuereinheit mit dem Fahrzeugkommunikationsnetzwerk (28 in Fig. 2) kommunizieren kann.

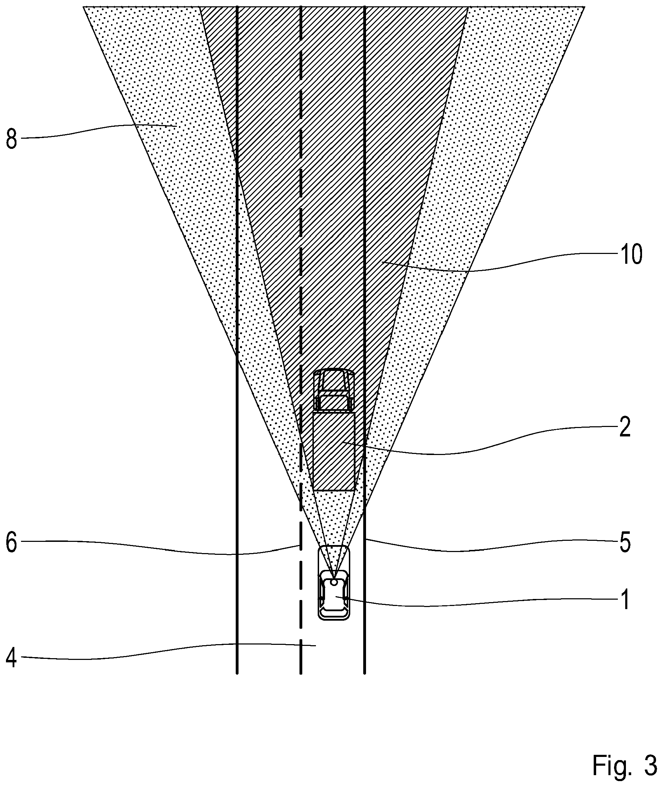

Fig. 3 zeigt eine typische Fahrsituation eines autonom fahrenden Fahrzeugs. Ein autonom fahrendes Fahrzeug 1 fährt auf der rechten Fahrspur 4 einer Straße 5. Das autonome Fahrzeug 1 umfasst eine Steuereinheit für autonomes Fahren (18 in FIG. 1), welche auf Grundlage von zur Verfügung stehenden Daten über eine vorgegebene Fahrtstrecke, von Umweltsensoren 20 aufgenommenen Umgebungsdaten, sowie von mittels den Fahrzeugsensoren erfassten Fahrzeugbetriebsparametern, die der Steuereinheit 18 von den Steuereinheiten 12, 14 und 16 zugeleitet werden, Parameter für den autonomen Betrieb des Fahrzeugs (beispielsweise Soll-Geschwindigkeit, Soll-Moment, Abstand zum Vorausfahrzeug, Abstand zum Fahrbahnrand, Lenkvorgang und dergleichen) bestimmt.

Wie aus FIG. 3 ersichtlich, fährt das autonome Fahrzeug 1 hinter einem Vorausfahrzeug, hier einem LKW 2, das einen Bereich 10 des Erfassungsbereichs 8 der Umfeldsensoren (20 in Fig. 1) des Fahrzeugs 1, hier insbesondere einer Frontkamera, verdeckt.

Die Steuereinheit für autonomes Fahren des Fahrzeugs 1 umfasst einen Prozessor, der dazu ausgelegt ist, in Abhängigkeit von einem geplanten Fahrmanöver, basierend auf Informationen eines sensorbasierten Umfeldmodells eine optimale Fahrposition unter Berücksichtigung des zulässigen Fahrspurbereichs zu berechnen, von welcher ein zu erfassender Bereich mit den eingebauten Umfeldsensoren (20 in Fig. 1) bestmöglich abgedeckt wird.

FIG. 4 zeigt beispielhaft, wie beim Fahren eines Fahrzeugs 1 hinter einem Vorausfahrzeug 2, das die Sicht verdeckt, verschiedenen geplanten Fahrmanövern bestimmte seitliche Positionsänderungen ΔPₗₐₜ des Fahrzeugs 1 innerhalb der Fahrspur (Lateralversätze) zugeordnet werden. Diese Zuordnungen können beispielsweise in Form einer Tabelle im Speicher (42, 43, 44 in Fig. 2) der Steuereinheit für autonomes Fahren hinterlegt sein. Dem Fahrmanöver "bevorstehendes Linksabbiegen" wird ein Lateralversatz "so weit wie möglich nach links" innerhalb der Fahrspur zugeordnet; dem Fahrmanöver "Überholen bei nächster Gelegenheit" wird ein Lateralversatz "so weit wie möglich nach links" innerhalb der Fahrspur zugeordnet; dem Fahrmanöver "Umfahren eines stehenden Fahrzeugs" wird ein Lateralversatz "so weit wie möglich nach links" innerhalb der Fahrspur zugeordnet; dem Fahrmanöver "bevorstehendes Rechtsabbiegen" wird ein Lateralversatz "so weit wie möglich nach rechts" innerhalb der Fahrspur zugeordnet; und dem Fahrmanöver "bevorstehendes Anhalten an Haltebucht" wird ein Lateralversatz "so weit wie möglich nach rechts" innerhalb der Fahrspurzugeordnet.

Wird, beispielsweise mit Hilfe der einen oder mehreren Umfeldsensoren 20, ein Vorausfahrzeug 2 erfasst, das die Sicht verdeckt, das heißt trifft das Fahrzeug 1 auf ein Vorausfahrzeug 2, das den Erfassungsbereich 8 einschränkt, so regelt die Steuereinheit für autonomes Fahren 18 die seitliche Position des Fahrzeugs 1 innerhalb der Fahrspur 4 auf Grundlage des geplanten Fahrmanövers unter Berücksichtigung der gespeicherten Zuordnungen, so dass für die Umfeldsensoren 20 des Fahrzeugs 1 unter den situativen Einschränkungen ein für die Durchführung des geplanten Fahrmanövers M optimaler Erfassungsbereich 8 gewährleistet ist. Die Steuereinheit für autonomes Fahren 18 erzeugt demnach auf Grundlage des geplanten Fahrmanövers M Sollstellwerte, die einem Lenkaktuator 12 zugeführt werden, welcher einen Motor zum Antrieb einer Lenkwelle umfasst, so dass der Motor auf der Grundlage der von der Steuereinheit für autonomes Fahren 18 eingegebenen Sollstellwerte angesteuert wird.

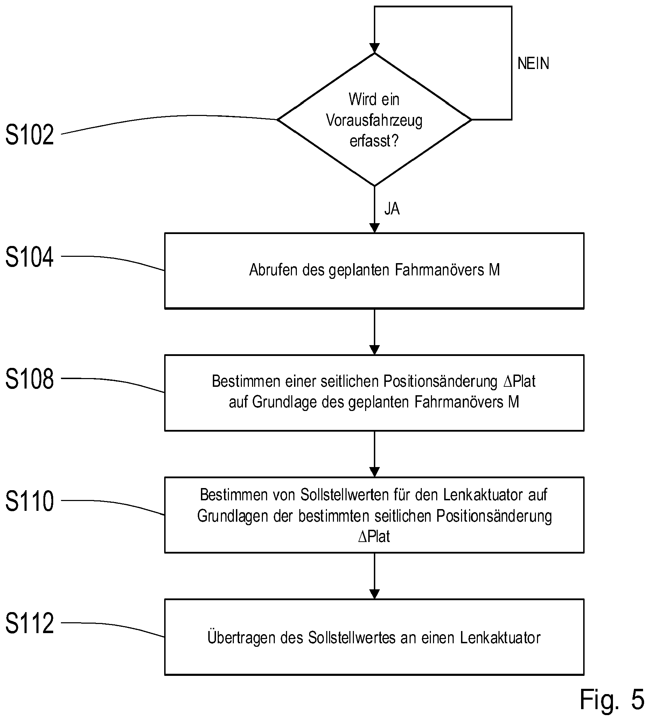

FIG. 5 zeigt ein Flussdiagramm, welches ein Ausführungsbeispiel eines Verfahrens gemäß der vorliegenden Erfindung veranschaulich, bei dem die Steuereinheit für autonomes Fahren die seitliche Position des Fahrzeugs 1 innerhalb der Fahrspur 4 auf Grundlage des geplanten Fahrmanövers einstellt. In einem Schritt S102 wird mit Hilfe der Umfeldsensoren bestimmt, ob in dem vor dem Fahrzeug befindlichen Bereich ein Vorausfahrzeug erfasst wird, das den Erfassungsbereich einschränkt. Wenn ein Vorausfahrzeug erfasst wird, das den Erfassungsbereich einschränkt, fährt der Prozess mit Schritt S104 fort. Wird kein Vorausfahrzeug erfasst oder wird ein Vorausfahrzeug erfasst, das den Erfassungsbereich nicht einschränkt, wird Schritt S102 solange wiederholt, bis ein Vorausfahrzeug erfasst wird, das den Erfassungsbereich einschränkt. In einem Schritt S104 ruft die Steuereinheit für autonomes Fahren ein geplantes Fahrmanöver M ab, das durch Kontextinformationen (z.B. Position des Fahrzeugs, Navigationskontext oder dergleichen) und Fahrzeugbetriebsparameter (Geschwindigkeit, Querbeschleunigung, Drehmoment) festgelegt ist. In einem Schritt S108 bestimmt die Steuereinheit für autonomes Fahren eine seitliche Positionsänderung ΔPₗₐₜ in der Fahrspur auf Grundlage des geplanten Fahrmanövers M. In einem Schritt S110 erzeugt die Steuereinheit für autonomes Fahren Sollstellwerte für den Lenkaktuator (Lenksystem 12 in FIG. 1) auf Grundlage der seitlichen Positionsänderung ΔPₗₐₜ. In einem Schritt S112 überträgt die Steuereinheit für autonomes Fahren die erzeugten Sollstellwerte an den Lenkaktuator und regelt die korrigierte seitliche Position des Fahrzeugs ein.

Gemäß der vorliegenden Erfindung wird eine korrigierte seitliche Position so berechnet, dass ein für die Durchführung des geplanten Fahrmanövers optimaler Erfassungsbereich für die Umfeldsensoren gewährleistet ist.

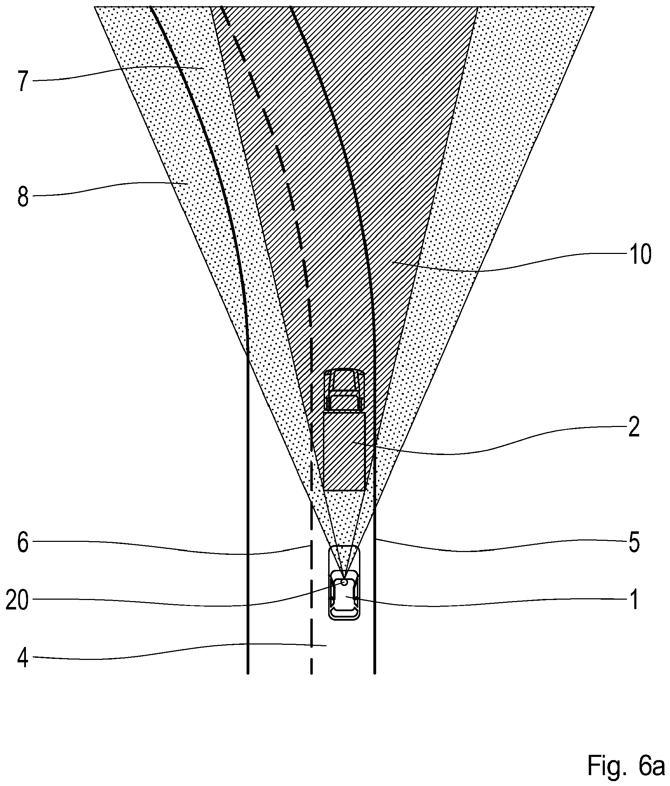

FIG. 6a-6d zeigen jeweils Darstellungen, die ein Ausführungsbeispiel des Verfahrens gemäß der vorliegenden Erfindung veranschaulichen, bei dem die seitliche Position des Fahrzeugs innerhalb der Fahrspur auf Grundlage des geplanten Fahrmanövers eingestellt wird.

FIG. 6a zeigt eine Darstellung, die ein Fahrzeug 1 in einer mittigen Position innerhalb der Fahrspur 4 zeigt, wenn es auf ein Vorausfahrzeug 2 trifft. Gemäß dem Verlauf der Straße 5 nähert sich das Fahrzeug 1 einer Linkskurve 7. Wie aus FIG. 6a ersichtlich, ist der Erfassungsbereich 8 der Umfeldsensoren 20 des Fahrzeugs 1 durch das Vorausfahrzeug 2 derart eingeschränkt, dass ein wesentlicher Bereich der folgenden Linkskurve 7 in den verdeckten Bereich 10 fällt, das heißt von den Umfeldsensoren 20 nicht erfasst werden kann und ein bevorstehendes Fahren der Linkskurve 7 erschwert ist. Aus den Kontextinformationen (z.B. Position des Fahrzeugs, Navigationskontext oder dergleichen) und Fahrzeugbetriebsparameter (Geschwindigkeit, Querbeschleunigung, Drehmoment) ist der Steuereinheit für autonomes Fahren des Fahrzeugs 1 bekannt, dass als geplantes Fahrmanöver das Durchfahren der Linkskurve 7 ansteht.

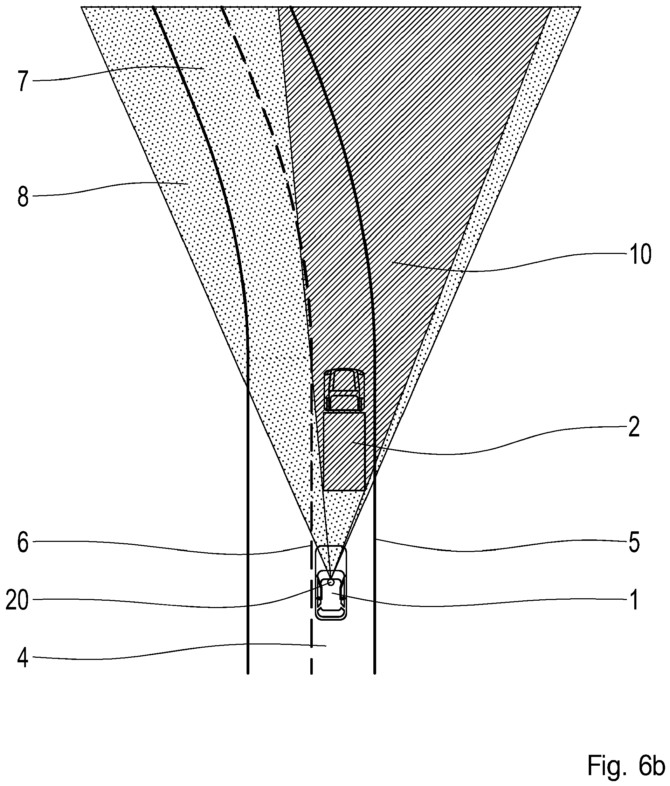

FIG. 6b zeigt eine Darstellung, die das Fahrzeug 1 aus FIG. 6a in einer gemäß der vorliegenden Erfindung korrigierten seitlichen Position innerhalb der Fahrspur 4 zeigt. Gemäß der im Speicher abgelegten Zuordnung von geplanten Fahrmanövern und zugehöriger seitlichen Positionsänderung (FIG. 4) und nach dem oben beschriebenen Verfahren (FIG. 5) hat die Steuereinheit für autonomes Fahren des Fahrzeugs 1 eine korrigierte seitliche Position des Fahrzeugs eingeregelt, die einem Lateralversatz "so weit wie möglich nach links" entspricht. Wie aus FIG. 6b ersichtlich, befindet sich das Fahrzeug 1 verglichen mit FIG. 6a weiter links innerhalb der Fahrspur 4. Die Steuereinheit für autonomes Fahren des Fahrzeugs 1 hat den Lateralversatz "so weit wie möglich nach links" hier realisiert, indem sie über den Lenkaktuator eine seitliche Position in unmittelbarer Nähe zu der Fahrbahnmittelmarkierung 6 eingeregelt hat. In dieser Position ist der verdeckte (nicht erfasste) Bereich 10 aus FIG. 6A zur rechten Seite hin verschoben, so dass der Bereich der Straße 5 der in eine Linkskurve verläuft vergleichsweise besser erfasst werden kann. Entsprechend kann die folgende Linkskurve von den Umfeldsensoren 20 besser erfasst werden, so dass ein bevorstehendes Fahren der Linkskurve erleichtert wird.

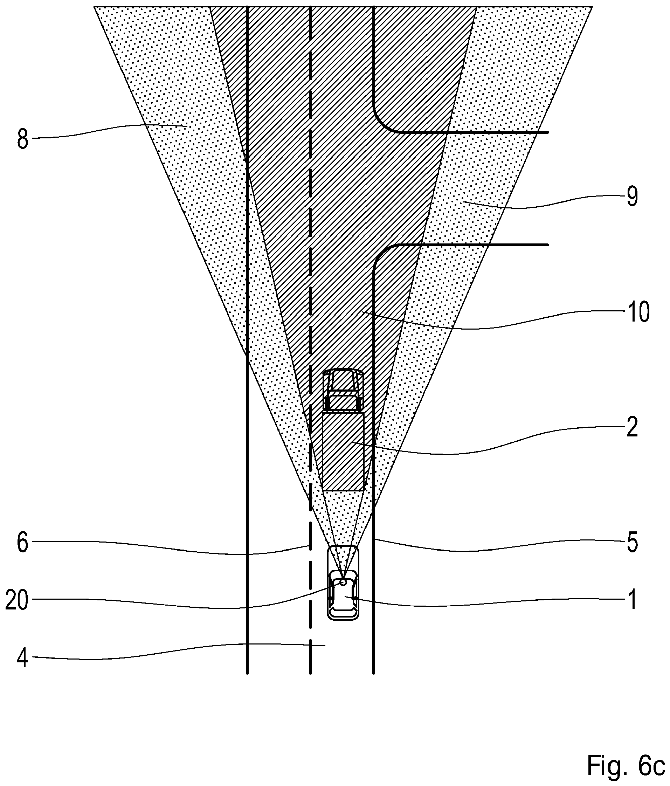

FIG. 6c zeigt eine Darstellung, die ein Fahrzeug 1 in einer mittigen Position innerhalb der Fahrspur zeigt, wenn es auf ein Vorausfahrzeug 2 trifft. Gemäß dem Verlauf der Straße 5 nähert sich das Fahrzeug 1 einer Abzweigung nach rechts 9. Wie aus FIG. 6c ersichtlich, ist der Erfassungsbereich der Umfeldsensoren des Fahrzeugs 1 durch das Vorausfahrzeug 2 derart eingeschränkt, dass ein wesentlicher Bereich der folgenden Abzweigung nach rechts 9 in den verdeckten Bereich 10 fällt, das heißt von den Umfeldsensoren 20 nicht erfasst werden kann, so dass ein bevorstehendes Rechtsabbiegemanöver erschwert ist. Aus den Kontextinformationen (z.B. Position des Fahrzeugs, Navigationskontext oder dergleichen) und Fahrzeugbetriebsparameter (Geschwindigkeit, Querbeschleunigung, Drehmoment) ist der Steuereinheit für autonomes Fahren des Fahrzeugs 1 bekannt, dass als geplantes Fahrmanöver ein Rechtsabbiegen an der Abzweigung 9 ansteht.

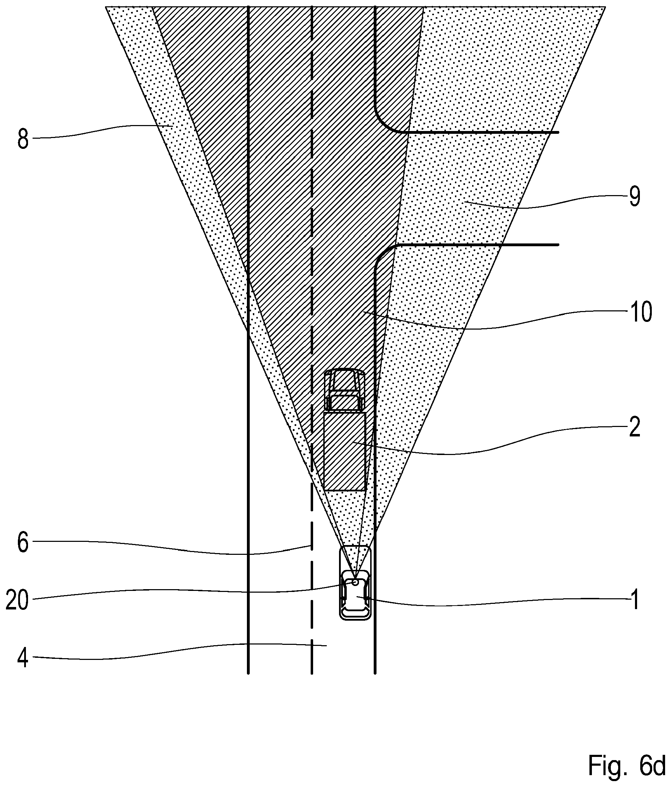

FIG. 6d zeigt eine Darstellung, die das Fahrzeug 1 aus FIG. 6c in einer gemäß der vorliegenden Erfindung korrigierten seitlichen Position innerhalb der Fahrspur zeigt. Gemäß der im Speicher abgelegten Zuordnung von geplanten Fahrmanövern und zugehöriger seitlichen Positionsänderung (FIG. 4) und nach dem oben beschriebenen Verfahren (FIG. 5) hat die Steuereinheit für autonomes Fahren des Fahrzeugs 1 eine korrigierte seitliche Position des Fahrzeugs eingeregelt, die einem Lateralversatz "so weit wie möglich nach rechts" entspricht. Wie aus FIG. 6d ersichtlich, befindet sich das Fahrzeug 1 verglichen mit FIG. 6c weiter rechts innerhalb der Fahrspur. Die Steuereinheit für autonomes Fahren des Fahrzeugs 1 hat den Lateralversatz "so weit wie möglich nach rechts" hier realisiert, indem sie über den Lenkaktuator eine seitliche Position in unmittelbarer Nähe zum rechten Fahrbahnrand der Fahrspur 4 eingeregelt hat. In dieser Position ist der verdeckte (nicht erfasste) Bereich 10 aus FIG. 6c zur linken Seite hin verschoben, so dass der rechte Fahrbahnrand der Fahrspur 4 mit der Abzweigung nach rechts 9 vergleichsweise besser erfasst werden kann. Entsprechend kann die folgende Abzweigung nach rechts 9 von den Umfeldsensoren 20 besser erfasst werden, so dass ein bevorstehendes Rechtsabbiegemanöver erleichtert wird.

Der Betrag der Verschiebung kann ferner von der Einschränkung des Erfassungsbereichs durch das Vorausfahrzeug abhängig sein. Insbesondere kann der Betrag der Verschiebung größer sein, je größer die Einschränkung des Erfassungsbereichs durch das Vorausfahrzeug, das heißt je größer das Vorausfahrzeug ist. Die Größe des Vorausfahrzeugs kann beispielsweise mittels Bilderkennung aus den Daten einer Frontkamera des autonomen Fahrzeugs ermittelt werden, z.B. abhängig von der realen Größe (Höhe und Breite) des Vorausfahrzeugs oder dem Verhältnis zwischen der Verdeckungsfläche, die das Vorausfahrzeug im Kamerabild bewirkt und der Gesamtfläche des Kamerabildes. Mittels des Lenkaktuators stellt die Steuereinheit die seitliche Position des Fahrzeugs in der Fahrspur entsprechend des von der Steuereinheit ermittelten Soll-Lateralversatzes ein.

Alternativ kann in einem Schritt S106 eine seitliche Position des Vorausfahrzeugs Pₗₐₜ(VF) in der Fahrspur berechnet werden und die Steuereinheit für autonomes Fahren in Schritt S108 eine seitliche Positionsänderung ΔPₗₐₜ in der Fahrspur auf Grundlage des geplanten Fahrmanövers M und der seitlichen Position Pₗₐₜ(VF) des Vorausfahrzeugs in der Fahrspur berechnen.

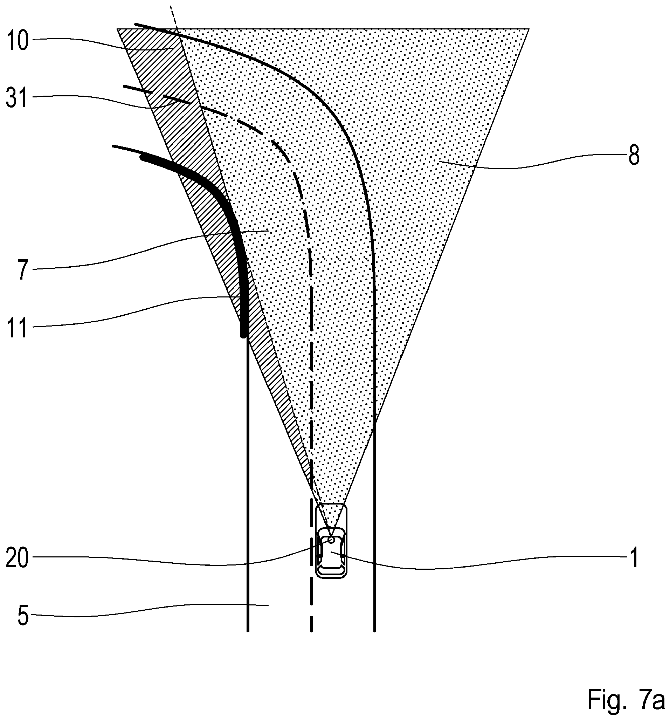

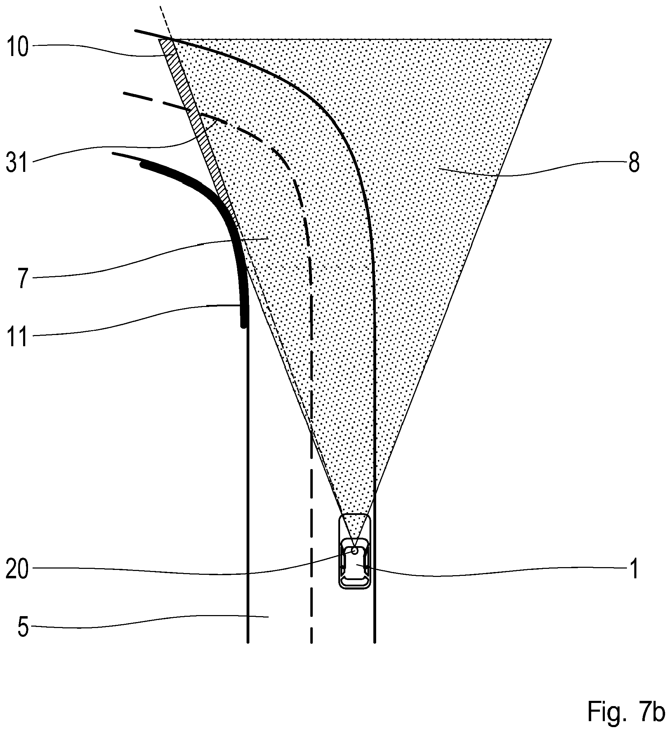

Ferner kann auf diese Weise, wie in FIG.7 veranschaulicht, die seitliche Position nicht nur bei Sichtbehinderung durch ein fahrendes Vorausfahrzeug, sondern auch bei Sichtbehinderung durch ein stationäres Sichthindernis so eingestellt werden, dass der Erfassungsbereich der Umfeldsensoren bezüglich dem geplanten Fahrmanöver verbessert wird. In diesem Fall kann die Position eines stationären Sichthindernisses berechnet werden und die Steuereinheit für autonomes Fahren kann eine seitliche Positionsänderung ΔPₗₐₜ in der Fahrspur auf Grundlage des geplanten Fahrmanövers M und der Position des Sichthindernisses berechnen.

FIG. 7a zeigt eine Darstellung, die ein Fahrzeug 1 in einer Position innerhalb der Fahrspur 4 zeigt, wenn es auf ein stationäres Sichthindernis, in diesem Fall eine Mauer 11, trifft. Gemäß dem Verlauf der Straße 5 nähert sich das Fahrzeug 1 einer Linkskurve 7. Wie aus FIG. 7a ersichtlich, ist der Erfassungsbereich 8 der Umfeldsensoren 20 des Fahrzeugs 1 durch die Mauer 11 derart eingeschränkt, dass ein wesentlicher Bereich der folgenden Linkskurve 7 in den verdeckten Bereich 10 fällt, das heißt von den Umfeldsensoren 20 nicht erfasst werden kann und ein bevorstehendes Fahren der Linkskurve 7 erschwert ist. Aus den Kontextinformationen (z.B. Position des Fahrzeugs, Navigationskontext oder dergleichen) und Fahrzeugbetriebsparameter (Geschwindigkeit, Querbeschleunigung, Drehmoment) ist der Steuereinheit für autonomes Fahren des Fahrzeugs 1 bekannt, dass als geplantes Fahrmanöver das Durchfahren der Linkskurve 7 ansteht.

FIG. 7b zeigt eine Darstellung, die das Fahrzeug 1 aus FIG. 7a in einer gemäß der vorliegenden Erfindung korrigierten seitlichen Position innerhalb der Fahrspur 4 zeigt. Die Steuereinheit für autonomes Fahren des Fahrzeugs 1 hat auf Grundlage des geplanten Fahrmanövers M und der Position und/oder Gestalt der Mauer 11 eine korrigierte seitliche Position des Fahrzeugs berechnet und eingeregelt. Dabei kann die Position und/oder Gestalt der Mauer beispielsweise mithilfe von Daten aus hochauflösenden Karten oder von Kameradaten ermittelt werden. Wie aus FIG. 7b ersichtlich, befindet sich das Fahrzeug 1 verglichen mit FIG. 7a weiter rechts innerhalb der Fahrspur 4. In dieser Position ist der durch die Mauer 11 verdeckte (nicht erfasste) Bereich 10 im Vergleich zu FIG. 7A verkleinert, so dass der Bereich der Straße 5 der in eine Linkskurve verläuft vergleichsweise besser erfasst werden kann. Wie aus FIG. 7a und 7b ersichtlich, kann beispielsweise der Strich 31 der Fahrbahnmittelmarkierung 6 aus der nicht korrigierten Position des Fahrzeugs 1 heraus nicht erfasst werden, kann aber aus der korrigierten Position des Fahrzeugs 1 heraus erfasst werden. Entsprechend kann die folgende Linkskurve von den Umfeldsensoren 20 aus der korrigierten Position heraus besser erfasst werden, so dass ein bevorstehendes Fahren der Linkskurve erleichtert wird.

Gemäß einem alternativen Ausführungsbeispiel des Verfahrens der vorliegenden Erfindung kann anstelle des vorstehend beschriebenen Lateralversatzes des Fahrzeugs innerhalb der Fahrspur der Folgeabstand des Fahrzeugs zu dem Vorausfahrzeug auf Grundlage des geplanten Fahrmanövers geregelt werden. Insbesondere kann, wenn ein Vorausfahrzeug erfasst wird, das den Erfassungsbereich einschränkt, auf der Grundlage von Daten, die von einem oder mehreren Umfeldsensoren (beispielsweise Radar, Kamera) gewonnen werden, ein Abstand d von dem Fahrzeug zu dem Vorausfahrzeug berechnet werden. Auf Grundlage des anstehenden Fahrmanövers kann dann der Folgeabstand angepasst werden.

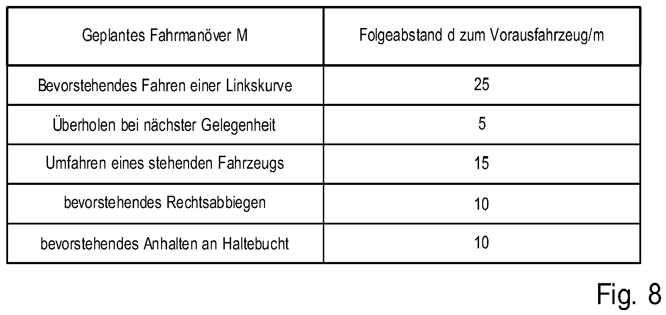

FIG. 8 zeigt ein alternatives Ausführungsbeispiel des Verfahrens gemäß der vorliegenden Erfindung, bei dem der Folgeabstand des Fahrzeugs zu dem Vorausfahrzeug auf Grundlage des geplanten Fahrmanövers eingestellt wird. FIG. 8 zeigt beispielhaft, wie beim Fahren eines Fahrzeugs 1 hinter einem Vorausfahrzeug 2, das die Sicht verdeckt, verschiedenen geplanten Fahrmanövern bestimmte Folgeabstände d(corr) des Fahrzeugs 1 zu dem Vorausfahrzeug 2 zugeordnet werden. Diese Zuordnungen können beispielsweise in Form einer Tabelle im Speicher (42, 43, 44 in Fig. 2) der Steuereinheit für autonomes Fahren hinterlegt sein. Dem Fahrmanöver "bevorstehendes Linksabbiegen" wird ein Folgeabstand d(corr) von 25 m zugeordnet; dem Fahrmanöver "Überholen bei nächster Gelegenheit" wird ein Folgeabstand d(corr) von 5 m zugeordnet; dem Fahrmanöver "Umfahren eines stehenden Fahrzeugs" wird ein Folgeabstand d(corr)von 15 m zugeordnet; dem Fahrmanöver "bevorstehendes Rechtsabbiegen" wird ein Folgeabstand d(corr) von 10 m zugeordnet; und dem Fahrmanöver "bevorstehendes Anhalten an Haltebucht" wird ein Folgeabstand d(corr) von 10 m zugeordnet. Diese hier beschriebenen Beispiele sind als schematisch aufzufassen. Der Fachmann kann den Abstand mit den ihm bekannten Mitteln ferner zusätzlich von der Geschwindigkeit des autonomen Fahrzeugs abhängig machen, so dass bei höheren Geschwindigkeiten größere Abstände vom Vorausfahrzeug eingehalten werden, als bei niedrigeren Geschwindigkeiten.

Wird, beispielsweise mit Hilfe der einen oder mehreren Umfeldsensoren, ein Vorausfahrzeug 2 erfasst, das die Sicht verdeckt, das heißt trifft das Fahrzeug 1 auf ein Vorausfahrzeug 2, das den Erfassungsbereich 8 einschränkt, so regelt die Steuereinheit für autonomes Fahren 18 den Folgeabstand d(corr) des Fahrzeugs 1 zu dem Vorausfahrzeug 2 auf Grundlage des geplanten Fahrmanövers M unter Berücksichtigung der gespeicherten Zuordnungen, so dass für die Umfeldsensoren 20 des Fahrzeugs 1 unter den situativen Einschränkungen ein für die Durchführung des geplanten Fahrmanövers M optimaler Erfassungsbereich 8 gewährleistet ist. Die Steuereinheit für autonomes Fahren 18 erzeugt beispielsweise auf Grundlage des bestimmten Folgeabstandes d(corr), des momentanen Abstands zwischen dem Fahrzeug 1 und dem Vorausfahrzeug 2 und der momentanen Geschwindigkeit des Fahrzeugs Sollstellwerte für eine Sollbeschleunigung oder eine Sollverzögerung (negative Sollbeschleunigung), die an einen Antriebsaktuator 16 oder Bremsaktuator 14 übertragen werden, so dass der Antriebsaktuator 16 oder der Bremsaktuator 14 auf der Grundlage der von der Steuereinheit für autonomes Fahren 18 eingegebenen Sollstellwerte angesteuert wird. Der Antriebsaktuator 16 oder der Bremsaktuator 14 regelt die Geschwindigkeit v des Fahrzeugs auf der Grundlage der von der Steuereinheit für autonomes Fahren berechneten Sollbeschleunigung oder Sollverzögerung.

Ferner kann die Steuereinheit für autonomes Fahren in die Berechnung der Sollbeschleunigung oder Sollverzögerung weitere Größen, wie etwa die Größe des Vorausfahrzeugs oder die Verkehrsdichte, oder wie oben bereits erwähnt die Fahrzeuggeschwindigkeit miteinfließen lassen. Die Größe des Vorausfahrzeugs kann beispielsweise mittels Bilderkennung aus den Daten einer Frontkamera des autonomen Fahrzeugs ermittelt werden. Sinnvoll ist beispielsweise ein Folgeabstand, der proportional zu der Verkehrsdichte und/oder proportional zu der Größe des Vorausfahrzeugs ist.

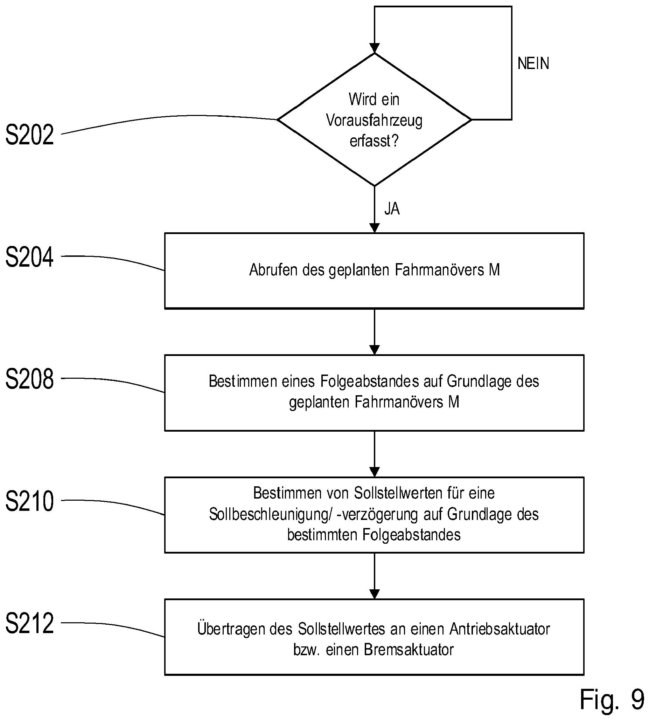

FIG. 9 zeigt ein Flussdiagramm, welches das alternative Ausführungsbeispiel des Verfahrens gemäß der vorliegenden Erfindung veranschaulicht. In einem Schritt S202 wird mit Hilfe der Umfeldsensoren bestimmt, ob in dem vor dem Fahrzeug befindlichen Bereich ein Vorausfahrzeug erfasst wird, das den Erfassungsbereich einschränkt. Wenn ein Vorausfahrzeug erfasst wird, das den Erfassungsbereich einschränkt, fährt der Prozess mit Schritt S204 fort. Wird kein Vorausfahrzeug erfasst oder wird ein Vorausfahrzeug erfasst, das den Erfassungsbereich nicht einschränkt, wird Schritt S202 solange wiederholt, bis ein Vorausfahrzeug erfasst wird, das den Erfassungsbereich einschränkt. In einem Schritt S204 ruft die Steuereinheit für autonomes Fahren ein geplantes Fahrmanöver M ab, das durch Kontextinformationen (z.B. Position des Fahrzeugs, Navigationskontext oder dergleichen) und Fahrzeugbetriebsparameter (Geschwindigkeit, Querbeschleunigung, Drehmoment) festgelegt ist. In einem Schritt S208 bestimmt die Steuereinheit für autonomes Fahren einen Folgeabstand d(corr) des Fahrzeugs zu dem Vorausfahrzeug auf Grundlage des geplanten Fahrmanövers M. In einem Schritt S210 erzeugt die Steuereinheit für autonomes Fahren für einen Antriebsaktuator (Antriebssystem 16 in FIG. 1) oder einen Bremsaktuator (Bremssystem 14 in FIG. 1) auf Grundlage des Folgeabstands d(corr) des Fahrzeugs zu dem Vorausfahrzeug, des momentanen Abstands d zwischen dem Fahrzeug und dem Vorausfahrzeug und der momentanen Geschwindigkeit des Fahrzeugs Sollstellwerte für eine Sollbeschleunigung oder eine Sollverzögerung (negative Sollbeschleunigung). Der momentane Abstand d zu dem Vorausfahrzeug kann dabei auf der Grundlage von Daten von einem Radarsensor oder einer Stereokamera gewonnen werden. In einem Schritt S212 überträgt die Steuereinheit für autonomes Fahren die erzeugten Sollstellwerte an den Antriebsaktuator bzw. Bremsaktuator und regelt den korrigierten Abstand zum Vorausfahrzeug ein.

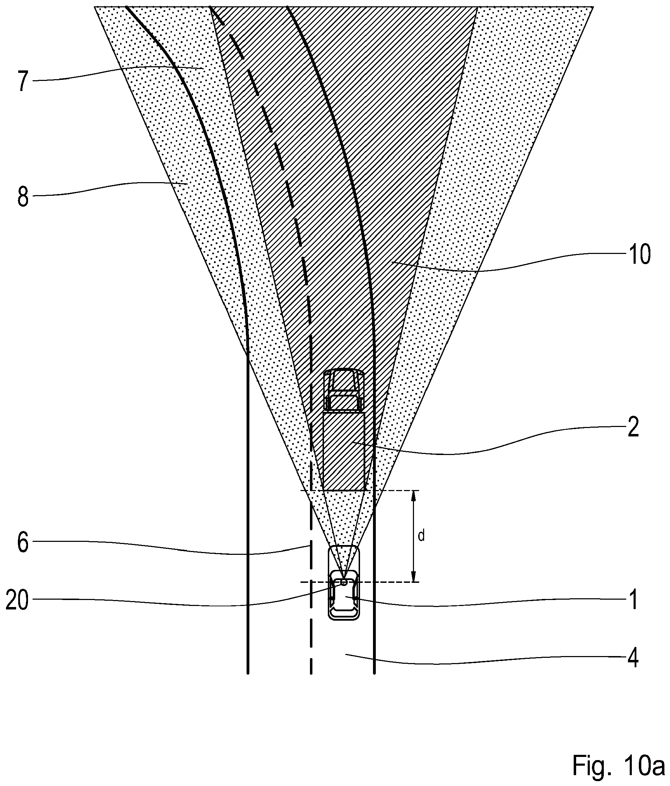

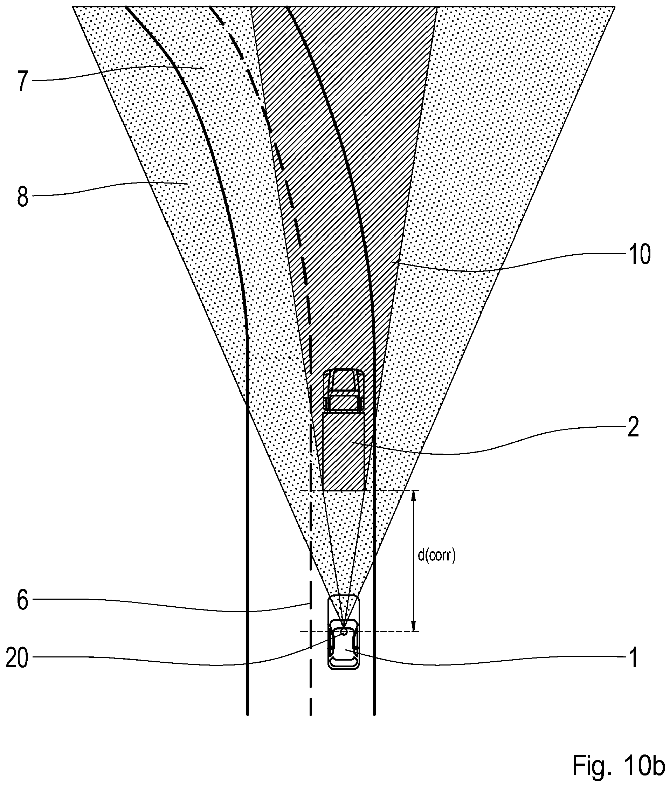

FIG. 10a und 10b zeigen jeweils Darstellungen, die das alternative Ausführungsbeispiel des Verfahrens gemäß der vorliegenden Erfindung veranschaulichen, bei dem der Folgeabstand des Fahrzeugs zum Vorausfahrzug auf Grundlage des geplanten Fahrmanövers eingestellt wird.

FIG. 10a zeigt eine Darstellung, die ein Fahrzeug 1 in einem Abstand d zu einem Vorausfahrzeug zeigt, wenn es auf ein Vorausfahrzeug 2 trifft. Gemäß dem Verlauf der Straße 5 nähert sich das Fahrzeug 1 einer Linkskurve 7. Wie aus FIG. 10a ersichtlich, ist der Erfassungsbereich 8 der Umfeldsensoren 20 des Fahrzeugs 1 durch das Vorausfahrzeug 2 derart eingeschränkt, dass ein wesentlicher Bereich der folgenden Linkskurve in den verdeckten Bereich 10 fällt, das heißt von den Umfeldsensoren 20 nicht erfasst werden kann und ein bevorstehendes Fahren der Linkskurve erschwert ist. Aus den Kontextinformationen (z.B. Position des Fahrzeugs, Navigationskontext oder dergleichen) und Fahrzeugbetriebsparameter (Geschwindigkeit, Querbeschleunigung, Drehmoment) ist der Steuereinheit für autonomes Fahren des Fahrzeugs 1 bekannt, dass als geplantes Fahrmanöver das Durchfahren der Linkskurve 7 ansteht.

FIG. 10b zeigt eine Darstellung, die das Fahrzeug 1 aus FIG. 10a mit einem gemäß der vorliegenden Erfindung korrigierten Folgeabstand d(corr) zu dem Vorausfahrzeug 2 zeigt. Wie aus FIG. 10b ersichtlich, befindet sich das Fahrzeug 1 verglichen mit FIG. 10a in einem größeren Folgeabstand d(corr) zu dem Vorausfahrzeug 2. Die Steuereinheit für autonomes Fahren des Fahrzeugs 1 hat hier den Folgeabstand 25 m, der dem Manöver "Bevorstehendes Fahren einer Linkskurve" zugeordnet ist realisiert, indem sie an den Bremsaktuator einen entsprechenden Sollstellwert für eine Sollverzögerung übertragen hat. In dieser Position ist der verdeckte (nicht erfasste) Bereich 10 aus FIG. 10a verschmälert, so dass der Bereich der Straße 5 der in eine Linkskurve verläuft vergleichsweise besser erfasst werden kann. Entsprechend kann die folgende Linkskurve von den Umfeldsensoren 20 besser erfasst werden, so dass ein bevorstehendes Fahren der Linkskurve erleichtert wird.

Gemäß einem weiteren alternativen Ausführungsbeispiel des Verfahrens der vorliegenden Erfindung können von der Steuereinheit für autonomes Fahren anstelle des vorstehend beschriebenen Lateralversatzes des Fahrzeugs innerhalb der Fahrspur oder des Folgeabstands des Fahrzeugs zu dem Vorausfahrzeug mehrere Positionsparameter, beispielsweise sowohl der Lateralversatz als auch der Folgeabstand, gleichzeitig auf Grundlage des geplanten Fahrmanövers geregelt werden.

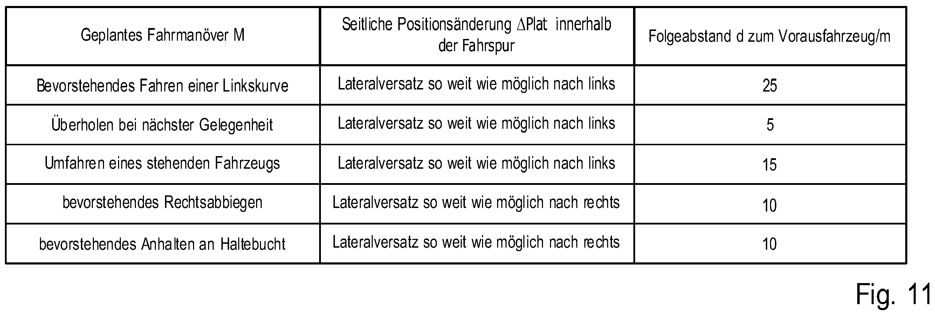

FIG. 11 zeigt ein weiteres alternatives Ausführungsbeispiel des Verfahrens gemäß der vorliegenden Erfindung, bei dem sowohl der Lateralversatz des Fahrzeugs innerhalb der Fahrspur als auch der Folgeabstand des Fahrzeugs zu dem Vorausfahrzeug auf Grundlage des geplanten Fahrmanövers eingestellt wird. FIG. 11 zeigt beispielhaft, wie beim Fahren eines Fahrzeugs 1 hinter einem Vorausfahrzeug 2, das die Sicht verdeckt, verschiedenen geplanten Fahrmanövern bestimmte seitliche Positionsänderungen ΔPₗₐₜ des Fahrzeugs 1 innerhalb der Fahrspur sowie Folgeabstände d(corr) des Fahrzeugs 1 zu dem Vorausfahrzeug 2 zugeordnet werden. Diese Zuordnungen können beispielsweise in Form einer Tabelle im Speicher (42, 43, 44 in Fig. 2) der Steuereinheit für autonomes Fahren hinterlegt sein. Dem Fahrmanöver "bevorstehendes Linksabbiegen" wird ein Lateralversatz "so weit wie möglich nach links" innerhalb der Fahrspur und ein Folgeabstand d(corr) von 25 m zugeordnet; dem Fahrmanöver "Überholen bei nächster Gelegenheit" wird ein Lateralversatz "so weit wie möglich nach links" innerhalb der Fahrspur und ein Folgeabstand d(corr) von 5 m zugeordnet; dem Fahrmanöver "Umfahren eines stehenden Fahrzeugs" wird ein Lateralversatz "so weit wie möglich nach links" innerhalb der Fahrspur und ein Folgeabstand d(corr) von 15 m zugeordnet; dem Fahrmanöver "bevorstehendes Rechtsabbiegen" wird ein Lateralversatz "so weit wie möglich nach rechts" innerhalb der Fahrspur und ein Folgeabstand d(corr) von 10 m zugeordnet; und dem Fahrmanöver "bevorstehendes Anhalten an Haltebucht" wird ein Lateralversatz "so weit wie möglich nach rechts" innerhalb der Fahrspur und ein Folgeabstand d(corr) von 10 m zugeordnet.

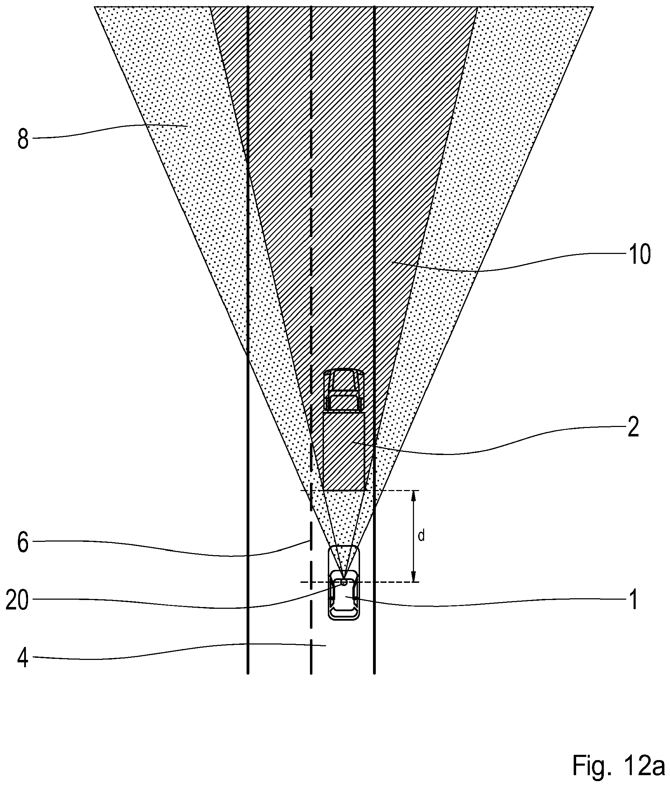

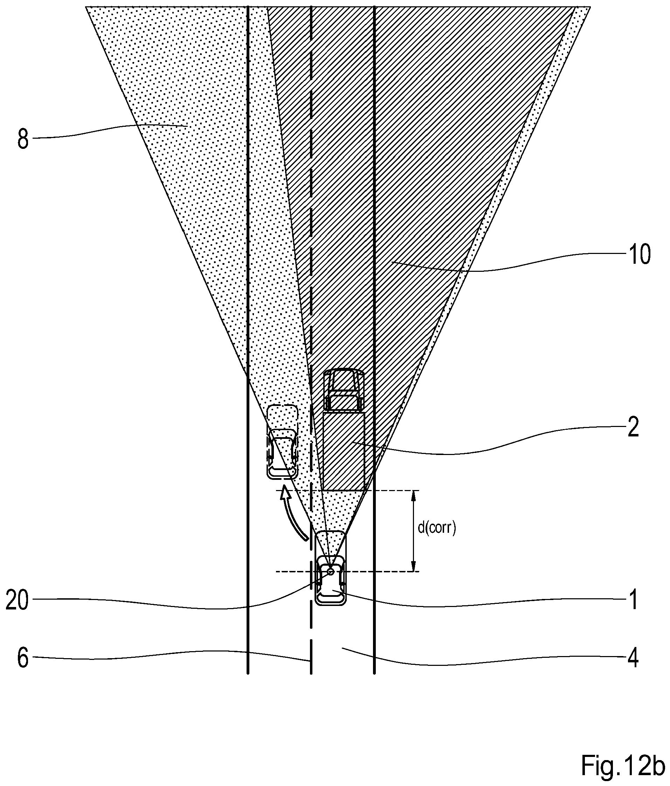

FIG. 12a und 12b zeigen jeweils Darstellungen, die das weitere alternative Ausführungsbeispiel des Verfahrens gemäß der vorliegenden Erfindung veranschaulichen, bei dem sowohl die seitliche Position des Fahrzeugs innerhalb der Fahrspur als auch der Folgeabstand des Fahrzeugs zum Vorausfahrzug auf Grundlage des geplanten Fahrmanövers eingestellt werden.

FIG. 12a zeigt eine Darstellung, die ein Fahrzeug 1 in einem Abstand d zu einem Vorausfahrzeug zeigt, wenn es auf ein Vorausfahrzeug 2 trifft. Aus den Kontextinformationen (z.B. Position des Fahrzeugs, Navigationskontext oder dergleichen) und Fahrzeugbetriebsparameter (Geschwindigkeit, Querbeschleunigung, Drehmoment) ist der Steuereinheit für autonomes Fahren des Fahrzeugs 1 bekannt, dass als geplantes Fahrmanöver Überholen bei nächster Gelegenheit ansteht.

FIG. 12b zeigt eine Darstellung, die das Fahrzeug 1 aus FIG. 12a in einer gemäß dem weiteren alternativen Ausführungsbeispiel des Verfahrens gemäß der vorliegenden Erfindung korrigierten Position bezüglich des Vorausfahrzeugs und der Fahrspur zeigt. Aufgrund des geplanten Überholvorgangs regelt die Steuereinheit für autonomes Fahren einen kleinen Abstand vom Vorausfahrzeug 2 ein. Auf diese Weise kann die Dauer des Überholvorgangs verkürzt werden. Gleichzeitig wird die seitliche Position innerhalb der Fahrbahn nach links verschoben, um eine bessere Sicht zur Einschätzung des Gegenverkehrs zu gewährleisten. Gemäß der im Speicher abgelegten Zuordnungen von geplanten Fahrmanövern und zugehörigen Positionsparametern (FIG. 11) stellt die Steuereinheit für autonomes Fahren des Fahrzeugs 1 eine korrigierte Position des Fahrzeugs ein, die einem Lateralversatz "so weit wie möglich nach links" und einem Folgeabstand von 5 m entspricht.

Gemäß den obigen Ausführungsbeispielen regelt die Steuereinheit für autonomes Fahren eine Fahrzeugposition (Lateralversatz, Folgeabstand) ein, die einem bestimmten geplanten Fahrmanöver gemäß einer im Speicher der Steuereinheit hinterlegten Tabelle zugeordnet ist.

Alternativ kann die Steuereinheit für autonomes Fahren unter Berücksichtigung des zulässigen Fahrspurbereichs auf Basis von geometrischen Modellen eine korrigierte Fahrzeugposition berechnen, von welcher ein für die Durchführung des geplanten Fahrmanövers zu erfassender Bereich von dem Erfassungsbereich der eingebauten Umfeldsensoren optimal abgedeckt wird.

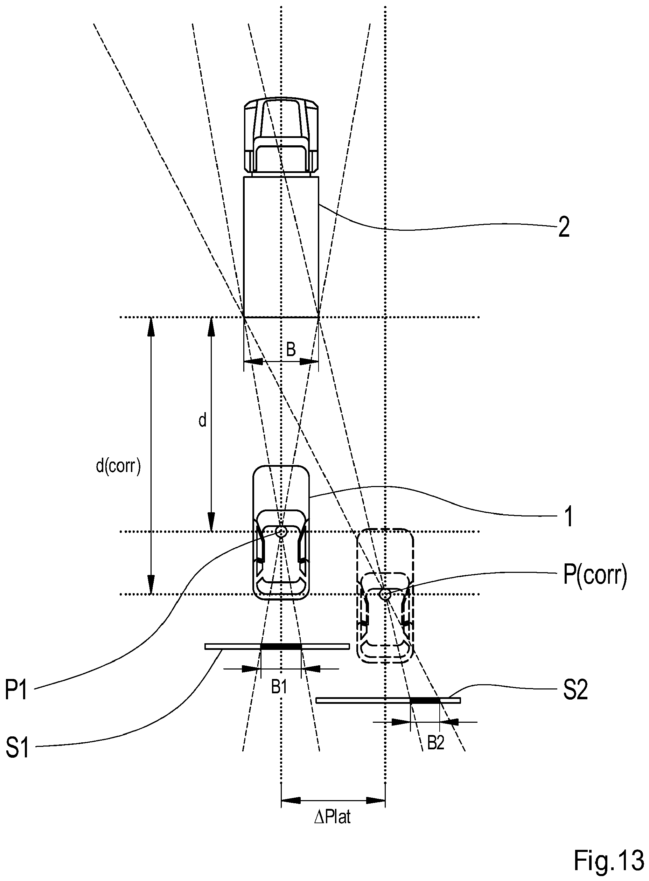

FIG. 13 zeigt eine Darstellung, welche die Berechnung einer korrigierten Fahrzeugposition auf Basis von geometrischen Modellen veranschaulicht. Das autonome Fahrzeug 1 umfasst hierfür ein Bildverarbeitungssystem (22 in FIG. 1) zur Verarbeitung von Bilddaten eines von einer Stereokamera in Fahrtrichtung aufgenommenen Bildes des Bereichs vor dem Fahrzeug. Ein Vorausfahrzeug 2, das sich im vorderen Blickfeld des Fahrzeugs 1 befindet, wird von der Stereokamera erfasst, und die Bilddaten S1 werden an das Bildverarbeitungssystem übertragen. Das Bildverarbeitungssystem verarbeitet die von der Kamera erhaltenen Bilddaten S1, um das Vorausfahrzeug 2 zu erkennen und dessen Ausdehnung B1 im Kamerabild S1 zu ermitteln. Die Stereokamera liefert Informationen über den Abstand d des Vorausfahrzeugs 2 bezüglich dem Fahrzeug 1 und die seitliche Position des Vorausfahrzeugs 2 bezüglich dem Fahrzeug 1. Aus diesen Informationen kann beispielsweise eine Fläche bzw. eine Breite B des Rückseitenbereichs des Vorausfahrzeugs 2 durch Projektion des Abbildes B1 auf der Bildebene S1 ermittelt werden. Wie durch die gestrichelten Projektionslinien in FIG. 13 gezeigt, kann die Steuereinheit für autonomes Fahren die Ausdehnung B1 des Vorausfahrzeugs 2 in einem virtuellen Kamerabild S2 ermitteln, das einer korrigierten Position P(corr) des Fahrzeugs 1 bzw. der Stereokamera entspricht. Auf diese Weise kann die Steuereinheit für autonomes Fahren eine korrigierte Position P(corr) ermitteln, die durch einen Folgeabstand d(corr) und eine seitliche Positionsänderungen ΔPₗₐₜ des Fahrzeugs 1 innerhalb der Fahrspur definiert ist und in der ein Erfassungsbereich der Umfeldsensoren verbessert wird.

### Bezugszeichen

- 1: autonomes Fahrzeug
- 2: Vorausfahrzeug
- 4: Fahrspur
- 5: Straße
- 6: Fahrbahnmittelmarkierung
- 7: Linkskurve
- 8: Erfassungsbereich
- 9: Abzweigung nach rechts
- 10: verdeckter Bereich
- 11: Mauer
- 12: Steuereinheit für Lenksystem
- 14: Steuereinheit für Bremssystem
- 16: Steuereinheit für Antriebstrang
- 18: Steuereinheit für autonomes Fahren
- 20: Umfeldsensoren
- 22: Bildverarbeitungssystem
- 24: Satellitennavigationseinheit
- 26: Benutzerschnittstelle
- 28: Fahrzeugkommunikationsnetzwerk
- 31: Strich der Fahrbahnmittelmarkierung
- 40: Prozessor
- 42: RAM-Speicher
- 43: ROM-Speicher
- 44: Speicherlaufwerk
- 45: Benutzerschnittstelle

## Patentansprüche

1. Steuereinheit für autonomes Fahren (18) für ein Fahrzeug (1), die einen Prozessor (40) umfasst, der dazu ausgelegt ist, in Abhängigkeit von einem geplanten Fahrmanöver eine korrigierte Fahrposition zu ermitteln, durch welche ein Erfassungsbereich (8) von Umfeldsensoren (20) des Fahrzeugs (1) bezüglich dem geplanten Fahrmanöver verbessert wird.

2. Steuereinheit für autonomes Fahren (18) nach Anspruch 1, wobei der Prozessor dazu ausgelegt ist, die korrigierte Fahrposition bei geregelter Folgefahrt des Fahrzeugs (1) hinter einem Vorausfahrzeug (2), welches den Erfassungsbereich (8) der Umfeldsensoren (20) des Fahrzeugs (1) einschränkt, zu ermitteln.

3. Steuereinheit für autonomes Fahren (18) nach einem der Ansprüche 1 oder 2, wobei der Prozessor (40) dazu ausgelegt ist, die korrigierte Fahrposition basierend auf Informationen eines sensorbasierten Umfeldmodels zu ermitteln.

4. Steuereinheit für autonomes Fahren (18) nach einem der vorstehenden Ansprüche, wobei zur Ermittlung der korrigierten Fahrposition Streckeninformationen über ein Navigationssystem und/oder aus hochauflösenden Karten herangezogen werden.

5. Steuereinheit für autonomes Fahren (18) nach einem der vorstehenden Ansprüche, wobei der Prozessor (40) dazu ausgelegt ist, die korrigierte Fahrposition unter Berücksichtigung des zulässigen Fahrspurbereichs (4) zu ermitteln.

6. Steuereinheit für autonomes Fahren (18) nach einem der vorstehenden Ansprüche, wobei der Prozessor (40) dazu ausgelegt ist, die korrigierte Fahrposition auf Basis eines geometrischen Models zu ermitteln.

7. Steuereinheit für autonomes Fahren (18) nach einem der vorstehenden Ansprüche, wobei der Prozessor (40) ferner dazu ausgelegt ist, zur Ermittlung der korrigierten Fahrposition die Position eines Vorausfahrzeugs (2) oder eines stationären Sichthindernisses (11) heranzuziehen.

8. Steuereinheit für autonomes Fahren (18) nach einem der Ansprüche 2-7, wobei die korrigierte Fahrposition durch einen Folgeabstand des Fahrzeugs (1) zum Vorausfahrzeug (2) und/oder durch einen Lateralversatz bezüglich des Vorausfahrzeugs (2) definiert ist.

9. Steuereinheit für autonomes Fahren (18) nach einem der vorstehenden Ansprüche, wobei der Prozessor (40) ferner dazu ausgelegt ist, die ermittelte korrigierte Fahrposition einzuregeln.

10. Verfahren für autonomes Fahren, bei dem in Abhängigkeit von einem geplanten Fahrmanöver eine korrigierte Fahrposition ermittelt wird, durch welche ein Erfassungsbereich (8) von Umfeldsensoren (20) des Fahrzeugs (1) bezüglich dem geplanten Fahrmanöver verbessert wird.
